# EUROPÄISCHE PATENTANMELDUNG

(11) **EP 1 313 330 A1**
(43) Veröffentlichungstag der Anmeldung: **21.05.2003**
(21) Anmeldenummer: 01440386.9
(22) Anmeldetag: 15.11.2001
(51) Int. Cl.: H04Q 3/00, H04M 7/00, H04L 29/06, H04M 3/42

(54) **Senden von Information an ein Endgerät eines anrufenden Teilnehmers über die erreichbare einem angerufenen Teilnehmer zugeordnete Endgeräte**

(71) Anmelder: ALCATEL, 75008 Paris (FR)
(72) Erfinder: Leifhelm, André, 71336 Waiblingen (DE); Geywitz, Klaus, 70839 Gerlingen (DE)
(74) Vertreter: Brose, Gerhard, Dipl.-Ing.

(57) **Zusammenfassung**

Die Erfindung betrifft ein Verfahren zum Senden von Information an ein Endgerät (T1; IT1) eines Kommunikationsnetzes (TN; INT; PN) eines anrufenden Teilnehmers über die einem angerufenen Teilnehmer zugeordnete Endgeräte (T2, T3; T2, T3, IT; IT2, IT3, MB), wobei die Netzeinrichtung (GK, SC) einen vom Endgerät des anrufenden Teilnehmers (T1; IT1) übermittelten Wunsch zur Herstellung einer Verbindung zum angerufenen Teilnehmer empfängt, die diesem angerufenen Teilnehmer zugeordneten Endgeräte (T2, T3; T2, T3, IT; IT2, IT3, MB) ermittelt, mindestens eines der ermittelten Endgeräte (T2, T3; T2, T3, IT; IT2, IT3, MB) auf aktuelle Erreichbarkeit prüft und anschließend eine Information an das Endgerät (T1; IT1) des anrufenden Teilnehmers über erreichbare dem angerufenen Teilnehmer zugeordnete Endgeräte sendet, sowie ein Kommunikationsnetz (TN; INT; PN), eine Netzeinrichtung (GK; SC) und ein Programmmodul zum Ablauf in einer Netzeinrichtung (GK; SC) hierfür.

## Beschreibung

Die Erfindung betrifft ein Verfahren zum Senden von Information an ein Endgerät eines Kommunikationsnetzes eines anrufenden Teilnehmers über die einem angerufenen Teilnehmer zugeordnete Endgeräte nach dem Oberbegriff des Anspruchs 1, sowie ein Kommunikationsnetz nach dem Oberbegriff des Anspruchs 8, eine Netzeinrichtung nach dem Oberbegriff des Anspruchs 9 und ein Programmmodul nach dem Oberbegriff des Anspruchs 10 hierfür.

Seit einigen Jahren werden bestehende Fernsprechnetze durch überlagerte sogenannte "Intelligente Netze" (engl.: intelligent networks, IN) erweitert. Dadurch können in besonders flexibler Weise Dienste realisiert werden, welche eine komfortable Nutzung des Fernsprechnetzes ermöglichen. Einer dieser Dienste stellt die Vergabe einer einheitlichen Rufnummer dar, bei welchem ein anrufender Teilnehmer kein bestimmtes Endgerät oder keinen bestimmten Anschluss eines angerufenen Teilnehmers, sondern einen bestimmten Dienst dieses Teilnehmers adressiert. So kann vorgesehen werden, dass ein Anruf, beispielsweise je nach Tageszeit oder je nach Wochentag, zu bestimmten Zielen geleitet wird. Zur Einrichtung eines solchen Dienstes erhält der Dienstkunde die Möglichkeit, eine bestimmte Einrichtung des Intelligenten Netzes, einen sogenannten "service management point (SMP)" beispielsweise über das Internet zu kontaktieren um entsprechende Diensteparameter zu übergeben. Die Kommunikation kann dabei mittels des im Internet bekannten Hypertext Transfer Protocols (HTTP), d.h. durch Austausch sogenannter Internetseiten (engl.: web pages) erfolgen.

Ein weiterer Dienst des Intelligenten Netzes betrifft eine personenbezogene Rufnummer, bei welcher ein Teilnehmer stets unter dem Anschluss im Netz erreichbar ist, an welchem er sich zuletzt angemeldet hat. Diese Rufnummer stellt dann eine Art Codenummer dar, welche durch das Intelligente Netz dynamisch einem bestimmten physikalischen Anschluss zugeordnet wird.

Die beschriebenen Dienste des Intelligenten Netzes dienen in erster Linie dazu, ankommende Rufe nach Maßgaben des angerufenen Teilnehmers an bestimmte Endgeräte zu lenken. Sofern der anrufende Teilnehmer nicht vom einer Einrichtung oder einem Endgerät des angerufenen Teilnehmers informiert wird, ist für ihn nicht sichtbar, nach welchen Kriterien er an ein bestimmtes Endgerät verwiesen wird und er kann auch keinerlei Auswahl treffen.

Zur Information des anrufenden Teilnehmers und zum Anbieten verschiedener Alternativen sind Dienste bekannt, bei welchem der anrufende Teilnehmer zunächst mit einer Einrichtung verbunden wird, welche diesem über den Nutzkanal verschiedene vordefinierte Alternativen für eine Gesprächsweiterleitung anbietet. Mittels Sprach- oder Tasteneingabe kann der anrufende Teilnehmer seine Wahl an diese Einrichtung übermitteln, welche das Gespräch dann entsprechend weiterleitet. Derartige Systeme werden beispielsweise von großen Behörden oder Serviceanbietern benutzt, welche eine Vielzahl von spezialisierten Servicepunkten oder Abteilungen aufweisen. Dem anrufenden Teilnehmer ist dabei häufig zunächst nicht bekannt, welche Alternativen oder Endgeräte vorhanden sind oder an welche Abteilung er sich mit seinem Anliegen wenden kann. Nach der Information über die möglichen Alternativen kann der Teilnehmer das für ihn nächstliegende Endgerät auswählen.

Ein Problem des im letzten Abschnitt genannten Verfahrens liegt darin, dass der anrufende Teilnehmer nicht erkennen kann, welche der angebotenen Alternativen tatsächlich aktuell zur Verfügung stehen. So kann ein ausgewähltes Endgerät beispielsweise ein zur Zeit personell unbesetztes oder ein belegtes Endgerät darstellen. Dies bedeutet aber, dass der anrufende Teilnehmer nutzlos lange Wartezeiten in Kauf nehmen muss. Er kann dann, nach erfolgloser erster Wahl entweder nach angemessener Zeit eine erneute Wahl mit identischem oder anderen Endgerät vornehmen.

Der Erfindung liegt nun die Aufgabe zugrunde, ein Verfahren und die dazu benötigten Einrichtungen anzugeben, um einen anrufenden Teilnehmer mit aktueller Information über erreichbare Endgeräte, welche einem angerufenden Teilnehmer zugeordnet sind, zu versorgen.

Diese Aufgabe wird erfindungsgemäß gelöst durch Verfahren nach der Lehre des Anspruchs 1, ein Kommunikationsnetz nach der Lehre des Anspruchs 8, eine Netzeinrichtung nach der Lehre des Anspruchs 9 und ein Programmmodul nach der Lehre des Anspruchs 10.

Der Grundgedanke der Erfindung ist, dass ein anrufender Teilnehmer über Endgeräte, welche einem angerufenen Teilnehmer zugeordnet sind, informiert wird. Dazu werden nach dem netzseitigen Empfang eines Verbindungswunsches vom anrufenden Teilnehmer solche Endgeräte ermittelt, welche dem angerufenen Teilnehmer zugeordnet sind und geprüft, welche dieser Endgeräte aktuell erreichbar sind. Der anrufende Teilnehmer wird dann über die ermittelten erreichbaren Endgeräte informiert.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Fig.1: zeigt als erfindungsgemäßes Kommunikationsnetz ein Fernsprechnetz zur Ausführung einer ersten Variante eines erfindungsgemäßen Verfahrens mit einer erfindungsgemäßen Netzeinrichtung mit einem erfindungsgemäßen Programmmodul,
- Fig.2: zeigt ein mit einem Fernsprechnetz verbundenes Paketdatennetz zur Ausführung einer erweiterten Variante eines erfindungsgemäßen Verfahrens und
- Fig.3: zeigt ein mit dem Internet verbundenes lokales Netz zur Ausführung einer weiteren Variante eines erfindungsgemäßen Verfahrens.

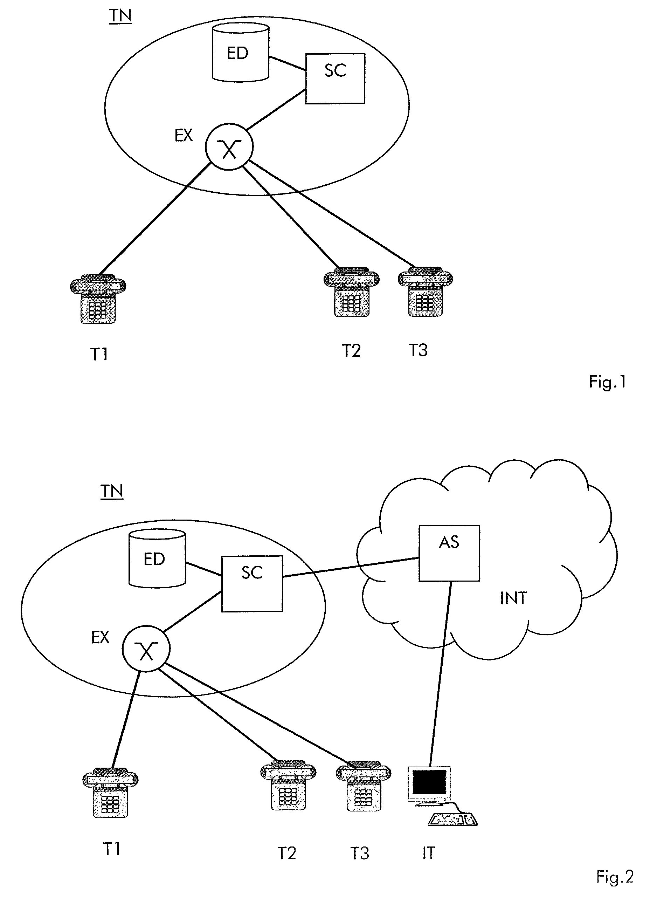

Fig.1 zeigt beispielhaft ein Fernsprechnetz TN mit einer Vermittlungsstelle EX und einem Dienste-Steuerrechner SC. Ein erstes, zweites und drittes Teilnehmer-Endgerät T1, T2, und T3 sind beispielhaft mit der Vermittlungsstelle EX verbunden. Der Steuerrechner SC ist mit der Vermittlungsstelle EX und einer Teilnehmerdatenbank ED verbunden.

Ohne Beschränkung der Erfindung wird hier wird vereinfachend angenommen, dass die Fernsprech-Endgeräte T1, T2 und T3 an dieselbe, in Fig. 1 dargestellte Vermittlungsstelle EX angeschlossen sind.

Zunächst wird ein erfindungsgemäßes einfaches Verfahren zur Ausführung in einem Fernsprechnetz TN mit einem, wie eingangs beschrieben, überlagerten Intelligenten Netz dargestellt. Die wesentlichen Voraussetzungen für das intelligente Netz stellen Vermittlungsstellen EX dar, sogenannte Service Switching Points (SSP), die durch zusätzliche Steuerungsprogramme in der Lage sind, Dienste-Rufe, d.h. Anrufe bestimmter Dienste-Rufnummern, zu erkennen und nach definierten Vorschriften weiter zu behandeln. Diese Vermittlungsstellen kommunizieren mit einem oder mehreren Dienste-Steuerrechnern SC, sogenannten Service Control Points (SCP), welche die Steuerung der entsprechenden Dienste, d.h. die Steuerung der Abfolgen notwendiger Verfahrensschritte durchführen. Der Steuerrechner SC hat Zugriff auf die Teilnehmerdatenbank ED, welche für jeden Teilnehmer bestimmte Diensteparameter, beispielsweise die Rufnummern zugeordneter Endgeräte gespeichert hat. Zusätzlich zu den genannten Dienste-Einrichtungen können auch weitere, in Fig. 1 nicht dargestellte Einrichtungen zur Durchführung des Dienstes notwendig sein, beispielsweise Schnittstellenrechner zur Kommunikation mit weiteren Kommunikationsnetzen oder Kommunikationsserver zur Sprachkommunikation mit den Teilnehmern T1 - T3. Diese Einrichtungen werden dann von einem Steuerrechner SC, zu gegebener Zeit, in den entsprechenden Dienst eingebunden.

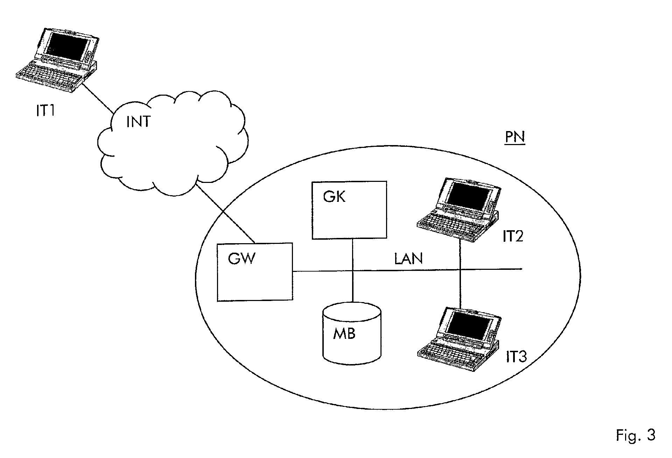

Ohne Beschränkung der Allgemeinheit soll zur Vereinfachung im folgenden stets angenommen werden, dass ein anrufender erster Teilnehmer von dem ersten Endgerät T1 aus einen zweiten Teilnehmer anruft, für welchen ein Dienst zur Information von anrufenden Teilnehmern eingerichtet ist. Diesem zweiten Teilnehmer sind beispielhaft die Endgeräte T2, T3 und gegebenenfalls (Fig.2 und Fig. 3) weitere Endeinrichtungen zugeordnet. Diese Zuordnung und weitere Diensteparameter, beispielsweise die dem gerufenen Teilnehmer zugeordneten Dienste-Rufnummer, eine tageszeitoder datumsabhängige Zuordnung bestimmter Endgeräte und an den anrufenden Teilnehmer zu übermittelnde Information zu jeder dieser Endgeräte, ist beispielhaft im Steuerrechner SC oder einer dem Steuerrechner SC zugänglichen Datenbank gespeichert. Die Einrichtung dieses Dienstes, d.h. die Speicherung entsprechender Diensteparameter, kann dabei mittels einer hier nicht dargestellten Einrichtung zur Diensteverwaltung oder eines service management points (SMP) erfolgen.

Im folgenden soll stets der von dem ersten Endgerät T1 anrufende Teilnehmer abkürzend als erster Teilnehmer T1 bezeichnet werden.

Zur Durchführung des erfindungsgemäßen Verfahrens wählt der erste Teilnehmer T1 die dem angerufenen Teilnehmer zugeordnete Dienste-Rufnummer. Bei dieser Rufnummer kann es sich beispielsweise um eine eingangs beschriebene persönliche Rufnummer eines entsprechend erweiterten Dienstes handeln. Der angerufene Teilnehmer kann eine Person oder eine Gruppe von Personen, beispielsweise Personen einer Firma oder Behörde oder einer Abteilung einer Firma oder Behörde darstellen. Der angerufene Teilnehmer kann hier im erweiterten Sinn auch die Firma oder Behörde selbst darstellen. Die Vermittlungsstelle EX erkennt, beispielsweise durch eine bestimmte Ziffernfolge führender Ziffern, dass mit dieser Rufnummer kein Endgerät, sondern ein durch das intelligente Netz durchzuführenden Dienst handelt und übermittelt ein entsprechendes Triggersignal an den Steuerrechner SC, welche die Dienster-Rufnummer oder eine den angerufenen Teilnehmer identifizierende Information enthält.

Der Steuerrechner SC identifiziert den angerufenen Teilnehmer und ermittelt die diesem Teilnehmer zugeordneten Endgeräte T2 und T3. Weiter ermittelt er, welchen Vermittlungsstellen EX diese Endgeräte T2 und T3 zugeordnet sind und weist diese Vermittlungsstellen an zu prüfen, ob diese Endgeräte T2 und T3 belegt sind. Alternativ oder zusätzlich kann insbesondere für Mobilfunkendgeräte geprüft werden, ob die entsprechenden Endgeräte aktuell erreichbar sind, d.h. jeweils eine Netzverbindung aufweisen. Die Vermittlungsstellen EX melden die entsprechende Verfügbarkeitsinformation der Endgeräte T2 und T3 an den Steuerrechner SC zurück. Der Steuerrechner SC sendet diese Verfügbarkeitsinformation gegebenenfalls zusammen mit weiterer Information über die Endgeräte T2 und T3 an die Vermittlungsstelle EX und veranlasst die Vermittlungsstelle EX zur Übermittlung einer entsprechenden Nachricht an den ersten Teilnehmer T1.

Diese weitere Information kann beispielsweise die konkrete aktuelle Information enthalten, dass der angerufene Teilnehmer unter der Rufnummer eines primären Endgeräts T2 Teilnehmers erreichbar ist, dass jedoch dieses Endgerät belegt ist und alternativ die Sekretärin dieses Teilnehmers unter der Rufnummer eines weiteren Endgeräts T3 erreichbar ist. Sie kann auch die Information enthalten, dass der angerufene Teilnehmer belegt ist und dem anrufenden Teilnehmer ein Platz in einer Warteschleife zugewiesen wird. Diese Information kann dabei listenförmig aufgebaut sein, welche nach Prioritätskriterien (entsprechend den Wünschen des einrichtenden angerufenen Teilnehmers) geordnet ist (z.B. bestimmte Reihenfolge der zugeordneten Endgeräte in der Liste).

Diese Nachricht kann beispielsweise als Sprachnachricht mittels einer Einrichtung zur Sprachsynthese des Intelligenten Netzes erfolgen. Dazu weist der Steuerrechner SC die Vermittlungsstelle EX an, eine Nutzverbindung vom ersten Teilnehmer zur genannten Einrichtung zu schalten und weist diese Einrichtung an, elektronisch vorliegende und/oder erhaltene Information in Sprache umzuwandeln und zu übermitteln (engl.: text-to-speech conversion). Alternativ kann diese Nachricht auch in elektronischer Form zur Anzeige auf einem Display des ersten Teilnehmers T1 erfolgen. Insbesondere kann dazu die heute sowohl im Festnetzen als auch im Mobilfunknetzen verfügbare sogenannte Kurznachrichtensystem (engl.: short message system, SMS) verwendet werden oder diese Information mittels des sogenannten "Wireless Application Protocols" (WAP) an entsprechend ausgerüstete Endgeräte T1 versendet werden.

In einer Weiterbildung der Erfindung wählt der anrufende Teilnehmer T1 eines der angebotenen erreichbaren Endgeräte T2 oder T3 aus und übermittelt eine entsprechende Information an den Steuerrechner SC, welcher dann gegebenenfalls die Rufnummer des ausgewählten Anrufziels ermittelt und die Vermittlungsstelle EX anweist, eine Kommunikationsverbindung zwischen dem ersten Endgerät T1 und dem ausgewählten Endgerät herzustellen. Falls diese Rufnummer bereits in der empfangenen Information enthalten ist, kann die Vermittlungsstelle EX eine Verbindungsherstellung unmittelbar durchführen.

Alternativ kann dieser Dienst auch so vorgesehen oder eingerichtet werden, dass nur dann eine Nachricht zur Information des anrufenden Teilnehmers T1 übermittelt wird, wenn ein als primär definiertes Endgerät T2 nicht erreichbar ist. Die Rufnummer dieses primären Endgeräts kann auch eine normale (physikalische) Rufnummer darstellen, welche die Vermittlungsstelle veranlasst, zunächst eine normale Verbindung zwischen dem ersten Teilnehmer und dem genannten primären Endgerät T2 herzustellen. Erst wenn festgestellt wird, dass dieses Endgerät belegt ist, erfolgt eine Information der Vermittlungsstelle EX an den Steuerrechner SC, welcher dann prüft, ob der angerufene Teilnehmer einen entsprechenden Dienst zur Information des anrufenden Teilnehmers eingerichtet hat. Im positiven Fall erfolgt die Ausführung des Dienstes entsprechend der Beschreibung des vorherigen Absatzes. Andernfalls wird das Gespräch normal, d.h. unter Übermittlung eines Besetztzeichens beendet.

In einer Weiterbildung der Erfindung können für verschiedene anrufende Teilnehmer T1 unterschiedliche Dienste-Ausführungen vorgesehen werden.

So kann beispielsweise für einen angerufenen Teilnehmer eine Liste mit privilegierten Teilnehmern definiert werden, welche bei einem Anruf unmittelbar mit einem primären Endgerät T2 des angerufenen Teilnehmers verbunden werden. Andere Teilnehmer erhalten statt dessen jeweils eine Information über alternative Endgeräte um beispielsweise entscheiden zu können, ob sie mit einem Sekretär oder Vertreter oder einer sogenannten voice mail box verbunden werden wollen.

Zusätzlich können verschiedene Informationen beispielsweise für verschiedene Tageszeiten oder Wochentage oder Informationen für bestimme Empfänger oder Empfängergruppen, beispielsweise hinterlegte Nachrichten oder Bilddokumente, für verschiedene Empfänger oder Gruppen von Empfängern in der Teilnehmerdatenbank ED gespeichert sein.

Der oben beschriebene Dienst kann auch außerhalb des Intelligenten Netzes mittels entsprechender unmittelbar in die Vermittlungsstelle EX integrierter Funktionen und der Vermittlungsstelle EX zugänglicher Einrichtungen (z.B. Teilnehmerdatenbank ED) durchgeführt werden.

In der folgenden Fig. 2 wird ein Verfahren in einem erweiterten, das Fernsprechnetz TN und beispielhaft das Internet INT enthaltendes Kommunikationsnetz beschrieben. Dazu zeigt Fig.2, aus Fig. 1 bekannt, das Fernsprechnetz TN mit der Vermittlungsstelle EX und dem Dienste-Steuerrechner SC. Die Vermittlungsstelle EX ist in gleicher Weise mit dem ersten, zweiten und dritten Endgerät T1, T2, und T3 und dem Steuerrechner SC verbunden. Darüber hinaus zeigt Fig.2 das Internet INT mit einem Internet-Adressenserver AS. Das Internet INT ist über den Adressenserver AS mit dem Steuerrechner SC verbunden. Weiter weist der Adressenserver AS eine Verbindung zu einem Internet-Endgerät IT auf.

Es wird hier angenommen, dass im Steuerrechner SC gegenüber der vorangehenden Beschreibung zusätzlich für den angerufenen Teilnehmer vermerkt ist, ob diesem Teilnehmer weitere Endgeräte anderer Kommunikationsnetze zugeordnet sind. In diesem Beispiel sei diesem Teilnehmer das Internet-Endgerät IT des Internets INT zugeordnet und diese Information in der Teilnehmerdatenbank ED gespeichert:

Nach der vorangehend beschriebenen Identifikation des angerufenen Teilnehmers durch den Steuerrechner SC ermittelt der Steuerrechner SC die ebenfalls in der Teilnehmerdatenbank ED gespeicherte Adresse des Adressenserver AS. Anschließend übermittelt der Steuerrechner SC an den Adressenserver AS eine Aufforderung, zu prüfen, of das Endgerät IT erreichbar, d.h. online ist.

Häufig werden Internet-Endgräte nur sporadisch oder zeitweise angeschaltet. Da viele dieser Endgeräte keine statische IP-Adresse oder Internet-Adresse, sondern für jede Internetsitzung neu zugeordnete IP-Adresse besitzen, muss zur Ausführung des beschriebenen Dienstes bekannt sein, wann ein Teilnehmer und unter welcher IP-Adresse sein Internet-Endgerät erreicht werden kann. Zur Identifizierung des Endgeräts IT übermittelt der Steuerrechner SC, falls das Endgerät IT keine statische Internet-Adresse aufweist, eine Rufnummer des Teilnehmers, den Namen des Teilnehmers oder eine andere Information, beispielsweise den Namen des Teilnehmers und die Internet-Adresse des Internet-Zugangsservers, welchem das Endgerät IT zugeordnet ist. Zur Ermittlung der aktuellen Internetadressen der Endgeräte betroffener Teilnehmer IT teilen diese Endgeräte dem Adressenserver AS jeweils ihre aktuellen Internet-Adressen mit, sobald sie online ist, d.h. eine Internetverbindung aufweisen. Ebenfalls teilen diese Endgeräte vor Beendigung der Internetverbindung dem Adressenserver mit, dass sie nicht mehr erreichbar sind Alternativ kontaktiert der Adressenserver AS zur Ermittlung der aktuellen Internetadresse des Endgeräts IT dem diesen Endgerät zugeordneten Internet-Zugangsserver, welcher eine Zuordnung von Namen und aktuellen Internetadressen gespeichert hält. Es ist auch möglich, dass der Adressenserver AS, z. B. mittels eines sogenannten Ping Mechanismus, in bestimmten Zeitabständen prüft, ob das Endgeräts IT erreichbar ist.

Anschließend sendet der Adressenserver AS dem Steuerrechner SC die Adressen erreichbarer zugeordneter Endgeräte im Internet INT, in diesem Beispiel des Endgeräts IT. Der Steuerrechner SC veranfasst die Übermittlung dieser Information an das anrufende Endgerät T1 entsprechend der Beschreibung unter Fig. 1.

Das erfindungsgemäße Verfahren kann auch direkt im Internet INT durchgeführt werden. Dazu sendet ein entsprechendes anforderndes Internet-Endgerät eine Anforderung an den Adressenserver AS, welche darin besteht, dem gewünschten Teilnehmer zugeordnete und erreichbare Internet-Adressen zu ermitteln. Mit diesen Adressen kann dann auch umfangreiche zusätzliche Information, beispielsweise auch Bildinformation, an das anfordernde Internet-Endgerät übermittelt werden.

Dass Fernsprechnetz TN wird häufig als Zugangsnetz zum Internet verwendet, d.h. ein Internet-Endgerät IT nutzt dann eine Fernsprechverbindung (beispielsweise mittels des sogenannten Point-to-Point Protocols, PPP) für den Zugang zum Internet INT. Häufig ergibt sich das Problem, insbesondere bei einem analogen Fernsprechanschluss mit der Möglichkeit der Herstellung nur eines Nutzkanals, dass entweder das Fernsprech-Endgerät oder das Internet-Endgerät eines Teilnehmers erreichbar ist. Für einen anrufenden Teilnehmer stellt sich das Fernsprech-Endgerät als nicht erreichbar dar, falls das Internet-Endgerät online ist, ohne dass der anrufende Teilnehmer den Grund für die Nicht-Erreichbarkeit kennt. Hier schafft die Erfindung Abhilfe, da der anrufende Teilnehmer erstens über den Grund der Nicht-Erreichbarkeit informiert werden kann und dem anrufenden Teilnehmer zweitens eine Adresse eines erreichbaren alternativen Endgeräts des angerufenen Teilnehmers mitgeteilt wird.

Der Steuerrechner SC kann als zentraler Rechner des Fernsprechnetzes TN, als Rechnerverbund oder als dezentraler Rechnerverbund realisiert werden. Als dezentraler Rechnerverbund können die einzelnen Rechner auch jeweils direkt den Vermittlungsstellen des Fernsprechnetzes TN zugeordnet werden oder unmittelbar in die Vermittlungsstellen integriert sein.

Auch der Adressenserver AS kann als Rechnerverbund realisiert werden. Weiter ist es möglich, die Funktionen des Steuerrechners SC und die Funktionen des Internetservers IS in einem gemeinsamen Rechner oder Rechnerverbund zusammenzuführen.

Der Steuerrechner SC, der Adressenserver AS und die weiteren hier beschriebenen Rechner weisen einen Programmspeicher zum Speichern eines Programmmoduls und eine Prozessoreinheit auf. Das Programmmodul, d.h. ein Datensatz mit Anweisungen zur Durchführung bestimmter Funktionen wird vor oder während des Rechnerbetriebs in den Programmspeicher geladen. Die entsprechenden Anweisungen werden sequentiell ausgelesen und in der Prozessoreinheit durchgeführt. Die von der Prozessoreinheit ermittelten Ergebnisse werden dann an weitere Einrichtungen der Rechner, beispielsweise von Peripherieeinrichtungen zum Senden oder zum Ansteuern von Schaltungselementen übergeben. Die Rechner können zusätzlich oder alternativ auch Einrichtungen oder Baugruppen mit fest verdrahteten Schalt- und Steuerelementen enthalten. Die in dieser Beschreibung dargestellten Funktionen werden allerdings vorzugsweise durch Ausführen entsprechender Programmanweisungen realisiert.

Im folgenden soll eine Ausführung eines erfindungsgemäßen Verfahrens für Echtzeitdienste in Paketdatennetzwerken beschreiben werden. Dazu zeigt Fig. 3 das Internet INT, woran ein erstes Internet-Endgerät IT1 und ein Gateway GW eines lokalen (Paketdaten-) Netzes PN angeschlossen ist. Das Lokale Netz PN weist einen lokalen Bus LAN auf, an welchen das Gateway GW, ein Gatekeeper GK, eine Einrichtung zur Verwaltung und Speicherung von Sprachnachrichten oder (Voice) Mailbox MB, ein zweites Internet-Endgerät IT2 und ein drittes Internet-Endgerät IT3 angeschlossen sind.

Die International Telecommunication Union ITU hat zur Übertragung von Echtzeitdaten ein Protokoll unter der Nummer H323 und dem Titel "Visual telepfone systems and equipment for local area networks which provide a non-garanteed qualitiy of service" definiert, im folgenden H323-Protokoll genannt. Dieses Protokoll betrifft Netzelemente und Endgeräte insbesondere für adiovisuelle Telekommunikationsdienste. Die Endgeräte oder Clients, hier beispielhaft die Internet-Endgeräte T2 und T3 und die Mailbox MB, können sowohl Personal Computer mit einer Internetschnittstelle als auch nach dem Internetprotokoll arbeitende Fernsprech-Endgeräte, sogenannte IP-Telefone darstellen. Das H.323-Protokoll beschreibt verbindungsorientierte (engl.: connection-oriented) Dienste. Dazu werden die zu verwendenden Audio-, die Video-Codecs und die Datenübertragung definiert. Die verschiedenen Informationsströme bilden sogenannte logische Kanäle oder Media-Streams. Echtzeitkanäle werden über das im Internet bekannte Real-Time Transport Protocol (RTP) und das User Datagram Protocol (UDP) abgewickelt. Die Nicht-Echtzeitkanäle (Daten) werden, wie sonst im Internet üblich mittels des Transmission Control Protocol (TCP) übertragen.

Im folgenden wird das in Fig. 3 gezeigte Private Netz beispielhaft als sogenannte H323-Zone gemäß dem Stand der Technik beschrieben:

Der Gatekeeper GK überwacht und steuert den Zugang einer Netzzone, welche hier beispielhaft deckungsgleich mit dem lokalen Netz PN ist. Er führt eine Liste über die Endgeräte des lokalen Netzes PN und wird bei jedem Anruf, abgehend wie ankommend von den Clients, d.h. den an den lokalen Bus LAN angeschlossenen Endgeräten bzw. dem Gateway GW informiert. Diese Information trägt der Gatekeeper GK in eine Tabelle ein, aus der die Zuordnung der Telefonnummer zur IP-Adresse und der Status (zum Beispiel: active/busy) des Clients hervorgeht. Er ist dadurch genau über seine Zone informiert und kann dementsprechend mit Weiterleitungen reagieren oder den Client informieren. Der Gatekeeper kann auch unzulässige Anforderungen (Admissionphase) abblocken (zum Beispiel: fehlende Amtsberechtigung, keine Berechtigung für Video). Somit stellt der Gatekeeper GK die zentrale Komponente in dem Netz PN dar.

Das Gateway GW verbindet verschiedene Paketdatennetze oder ein Paketdatennetz mit einem konventionellen Fernsprechnetz (zum Beispiel: H.323 mit ISDN). Dabei kann es notwendig sein, die unterschiedlichen Audio- beziehungsweise Videoströme umzusetzen. Diese Umsetzung heißt Transcodierung. Das Gateway muss auch in der Lage sein, Mehrfrequenz(engl.: Dual Tone Multiple Frequency, DTMF) und Faxsignale zu interpretieren und anzupassen. Neben dieser Umsetzung kann es erforderlich sein, die unterschiedlichen Signalisierungsverfahren zu konvertieren (zum Beispiel: von der H.323- auf ISDN-Signalisierung).

Alternativ zum H323-Protokoll kann auch das von der Internet Engineering Task Force (IETF) definierte "Session Initiation Protocol" (SIP) verwendet werden. Das Session Initiation Protocol ist in die Internet-Protokollstruktur integriert und stützt sich ebenfalls für Echtzeitübertragung auf das oben erwähnte Real-Time Transport Protocol (RTP).

Erfindungsgemäß fordert das erste Internet-Endgerät IT1 eine Echtzeitverbindung, beispielsweise eine sogenannte Voice over IP (VolP) Verbindung zu einen Internet-Endgerät eines Teilnehmers des Lokalen Netzes PN über das Gateway GW. Der Gatekeeper GK ermittelt die diesem Teilnehmer im lokalen Netz PN zugeordneten Endgeräte, hier beispielhaft die Internet-Endgeräte IT2 und IT3 und die Mailbox MB. Weiter ermittelt er, durch Auswertung der oben genannten Tabelle, in welche der Status der Endgeräte eingetragen ist, welches dieser Endgeräte erreichbar ist.

Zusätzlich kann der Gatekeeper GK auch, analog der Beschreibung der vorangehenden Zeichnungen, überprüfen ob der anrufende Teilnehmer als privilegierter Teilnehmer vermerkt ist, welcher bevorzugt mit einem entsprechenden primären oder privilegierten Endgerät verbunden wird und/oder privilegierte Information erhält. Es ist auch möglich, dass ein anrufender privilegierter Teilnehmer erst dann bevorzugt behandelt wird, wenn er sich zuvor authentifiziert, beispielsweise durch Übermittlung eines Passworts an den Gatekeeper GK.

Der Gatekeeper GK veranlasst dann die Übermittlung einer Information über diejenigen dem angerufenen Teilnehmer zugeordneten Endgeräte, welche (für den anrufenden Teilnehmer) erreichbar sind. Ist beispielweise das primäre zweite Internet-Endgerät IT2 des angerufenen Teilnehmers besetzt, so erhält der anrufende Teilnehmer die Information, dass alternativ ein drittes Endgerät, beispielsweise das Endgerät seines Vertreters, oder die Mailbox MB zur Verfügung steht. Der anrufende Teilnehmer kann eines der Endgeräte auswählen und dem Gatekeeper GK dann eine entsprechende Aufforderung zur Herstellung einer Verbindung zu dem ausgewählten Endgerät übermitteln.

Ein erfindungsgemäßes Verfahren kann ebenso innerhalb einer privaten Fernsprechanlage, bei welchem die Endgeräte an eine private Vermittlungsstelle (engl.: private branche exchange, PABX) angeschlossen sind, durchgeführt werden. Ebenso, wie oben für den Gatekeeper GK beschrieben, führt die Vermittlungsstelle eine Liste über Zuordnungen der angeschlossenen Endgeräte. Bei einem eingehenden Anruf eines Endgeräts werden dann die diesem Endgerät zugeordneten weiteren Endgeräte und die aktuellen Zustände (frei/belegt) dieser Endgeräte ermittelt. Der anrufende Teilnehmer wird dann entsprechend der vorangehenden Beschreibung informiert.

## Patentansprüche

1. Verfahren zum Senden von Information an ein Endgerät (T1; IT1) eines Kommunikationsnetzes (TN, INT, PN) eines anrufenden Teilnehmers über die einem angerufenen Teilnehmer zugeordnete Endgeräte (T2, T3; T2, T3, IT; IT2, IT3, MB), **dadurch gekennzeichnet, dass** in einer Netzeinrichtung (GK, SC) folgende Schritte durchgeführt werden:
• Empfangen eines vom Endgerät des anrufenden Teilnehmers (T1; IT1) übermittelten Wunsches zur Herstellung einer Verbindung zum angerufenen Teilnehmer,
• ermitteln der diesem angerufenen Teilnehmer zugeordneten Endgeräte (T2, T3; T2, T3, IT; IT2/ IT3, MB),
• prüfen mindestens eines der ermittelten Endgeräte (T2, T3; T2, T3, IT; IT2, IT3, MB) auf aktuelle Erreichbarkeit und
• senden einer Information an das Endgerät (T1; IT1) des anrufenden Teilnehmers über erreichbare dem angerufenen Teilnehmer zugeordnete Endgeräte.

2. Verfahren nach Anspruch 1, **dadurch gekennzeichnet, dass** der Verbindungswunsch eine Adresse oder Rufnummer eines Endgeräts (T2) darstellt, und dass die zugeordneten Endgeräte alternative Anrufziele (T3) darstellen.

3. Verfahren nach Anspruch 2, **dadurch gekennzeichnet, dass**, die Ermittlung von alternativen Anrufzielen (T3) nur dann durchgeführt wird, wenn das gewählte Endgerät (T2) nicht erreichbar ist.

4. Verfahren nach Anspruch 1, **dadurch gekennzeichnet, dass** die Netzeinrichtung (GK; SC) die aktuelle Belegung sämtlicher ihr zugeordneter Endgeräte (T2, T3; T2, T3, IT; IT2, IT3, MB) speichert und eine Prüfung eines Endgeräts auf seine Verfügbarkeit durch Auswertung der aktuellen Belegungen vornimmt.

5. Verfahren nach Anspruch 1, **dadurch gekennzeichnet, dass** mindestens ein Endgerät (T2, T3; T2, T3, IT; IT2, IT3, MB) Verfügbarkeitsmeldungen an die Netzeinrichtung (GK; SC) übermittelt, aus welcher hervorgeht, ob dieses Endgerät aktuell verfügbar oder nicht verfügbar ist, und dass die Prüfung dieses Endgeräts auf seine aktuelle Verfügbarkeit durch Auswertung der entsprechenden Verfügbarkeitsmeldung erfolgt.

6. Verfahren nach Anspruch 1, **dadurch gekennzeichnet, dass** die Prüfung eines Endgeräts (T2, T3; T2, T3, IT; IT2, IT3, MB) auf Verfügbarkeit dadurch erfolgt, dass nach Empfang des Verbindungswunsches eine Prüfung der Verfügbarkeit eines Endgeräts durch eine Signalisierung zwischen diesem Endgerät und der Netzeinrichtung (GK; SC) erfolgt.

7. Verfahren nach Anspruch 1 **dadurch gekennzeichnet**, eine Information über eine vom anrufenden Teilnehmer T1 getroffene Auswahl eines der erreichbaren Endgeräte (T2, T3; T2, T3, IT; IT2, IT3, MB) in der Netzeinrichtung (GK; SC) empfangen wird, welche anschließend eine Verbindungsherstellung des Endgeräts des anrufenden Teilnehmers (T1; IT1) und dem ausgewählten Endgerät veranlasst.

8. Kommunikationsnetz (TN; INT; PN) mit einer Netzeinrichtung (GK; SC) zum Senden von Information an ein Endgerät (T1; IT1) eines anrufenden Teilnehmers über die einem angerufenen Teilnehmer zugeordneten Endgeräte (T2, T3; T2, T3, IT; IT2, IT3, MB), **dadurch gekennzeichnet, dass** die Netzeinrichtung (GK; SC) folgende Mittel aufweist:
• Empfangsmittel zum Empfangen eines vom Endgerät (T1; IT1) des anrufenden Teilnehmers übermittelten Wunsches zur Herstellung einer Verbindung zum angerufenen Teilnehmer,
• Suchmittel zum Ermitteln diesem angerufenen Teilnehmer zugeordneten Endgeräte (T2, T3; T2, T3, IT; IT2/ IT3, MB),
• Prüfmittel zum Prüfen mindestens eines der ermittelten Endgeräte (T2, T3; T2, T3, IT; IT2, IT3, MB) auf aktuelle Erreichbarkeit und
• Informierungsmittel zum Informieren des anrufenden Teilnehmers über erreichbare Endgeräte.

9. Netzeinrichtung (GK; SC) eines Kommunikationsnetzes (TN; INT; PN) zum Senden von Information an ein Endgerät (T1; IT1) eines anrufenden Teilnehmers über die einem angerufenen Teilnehmer zugeordneten Endgeräte (T2, T3; T2, T3, IT; IT2, IT3, MB), **dadurch gekennzeichnet, dass** die Netzeinrichtung (GK, SC) folgende Mittel aufweist:
• Empfangsmittel zum Empfangen eines vom Endgerät (T1; IT1) des anrufenden Teilnehmers übermittelten Wunsches zur Herstellung einer Verbindung zum angerufenen Teilnehmer,
• Suchmittel zum Ermitteln diesem angerufenen Teilnehmer zugeordneten Endgeräte (T2, T3; T2, T3, IT; IT2, IT3, MB),
• Prüfmittel zum Prüfen mindestens eines der ermittelten Endgeräte (T2, T3; T2, T3, IT; IT2, IT3, MB) auf aktuelle Erreichbarkeit und
• Informierungsmittel zum Informieren des anrufenden Teilnehmers über erreichbare Endgeräte.

10. Programmmodul zum Ablauf in einer Netzeinrichtung (GK; SC) eines Kommunikationsnetzes (TN; INT; PN) zum Senden von Information an ein Endgerät (T1; IT1) eines anrufenden Teilnehmers über die einem angerufenen Teilnehmer zugeordnete Endgeräte (T2, T3; T2, T3, IT; IT2, IT3, MB), **dadurch gekennzeichnet, dass** sie folgende Schritte steuert:
• Empfangen eines vom Endgerät des anrufenden Teilnehmers (T1; IT1) übermittelten Wunsches zur Herstellung einer Verbindung zum angerufenen Teilnehmer,
• ermitteln der diesem angerufenen Teilnehmer zugeordneten Endgeräte (T2, T3; T2, T3, IT; IT2, IT3, MB),
• prüfen mindestens eines der ermittelten Endgeräte (T2, T3; T2, T3, IT; IT2, IT3, MB) auf aktuelle Erreichbarkeit und
• senden einer Information an das Endgerät (T1; IT1) des anrufenden Teilnehmers über erreichbare dem angerufenen Teilnehmer zugeordnete Endgeräte.
